# EUROPÄISCHE PATENTSCHRIFT

(11) **EP 1 088 182 B1**
(45) Veröffentlichungstag und Bekanntmachung des Hinweises auf die Patenterteilung: **14.03.2007**
(21) Anmeldenummer: 99936347.6
(22) Anmeldetag: 28.05.1999
(51) Int. Cl.: F16K 31/06

(54) **MAGNETVENTIL**
ELECTROMAGNETIC VALVE
ELECTROVANNE

(30) Priorität: 15.06.1998 DE 19826579
(43) Veröffentlichungstag der Anmeldung: 04.04.2001
(73) Patentinhaber: HYDRAULIK-RING GMBH, 97828 Marktheidenfeld (DE)
(72) Erfinder: SPAHN, Wolfgang, D-97737 Gemünden (DE); STRAUSS, Klemens, D-97833 Frammersbach (DE)
(86) Internationale Anmeldenummer: PCT/DE1999/001577
(87) Internationale Veröffentlichungsnummer: WO 1999/066239

(56) Entgegenhaltungen:
- EP-A- 0 291 649
- DE-A- 3 126 246
- DE-A- 4 305 789
- US-A- 4 390 158
- US-A- 5 476 245

## Beschreibung

Die Erfindung betrifft ein Magnetventil gemäß dem Oberbegriff des Patentanspruches 1.

Derartige Magnetventile werden beispielsweise als Druckbegrenzungsventile in Hydraulikschaltungen oder - in jüngster Zeit - bei der Steuerung von Common-Rail-Dieseleinspritzsystemen eingesetzt. Solche Ventile zeichnen sich durch ein gutes Ansprechverhalten aus, so daß eine schnelle Druckabsenkung im System, beispielsweise in der Common-Rail ermöglicht ist. Bei der Konstruktion ist man bestrebt, die Ventile möglichst kompakt auszubilden, wobei der Durchflußwiderstand möglichst gering sein sollte.

In der DE 43 05 789 A1 ist ein herkömmliches Magnetventil in Flachanker-Bauweise dargestellt, bei dem ein Spulenkörper in einem Eisenkern - im folgenden Gehäuse genannt - aufgenommen ist. Der Anker bildet mit einem Polkern bei nicht bestromter Spulenwicklung einen Axialspalt aus. Bei der bekannten Lösung ist an dem Flachanker ein Stößel befestigt, dessen freier Endabschnitt in der Grundposition einen kugelförmigen Ventilkörper gegen einen Ventilsitz vorspannt.

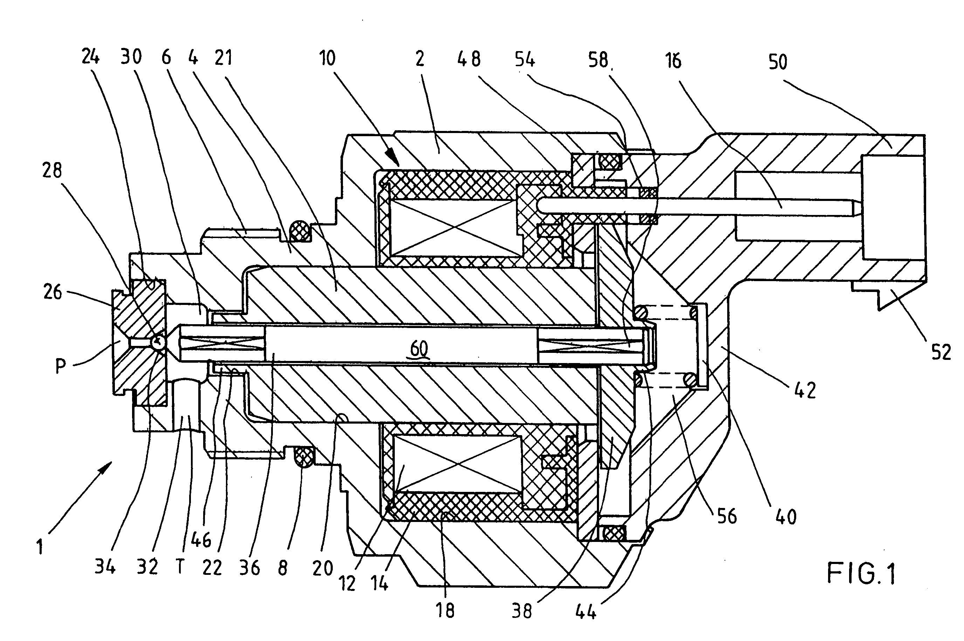

Bei Bestromung des in Figur 1 dargestellten Magnetventils 1 wird der Anker 38 mit einer Kraft beaufschlagt. Diese Axialkraft wird über den Anker 38 auf den Stößel 36 übertragen, so daß dessen Spitze den Ventilkörper 28 an den Ventilsitz 34 drückt und somit der Druck am Eingangsanschluß P variiert werden kann.

Zur Verringerung des fertigungstechnischen Aufwandes bei der Herstellung des Gehäuses kann man den Polkern und den den Spulenkörper aufnehmenden Teil des Gehäuses - wie in der DE-OS 31 26 246 vorgeschlagen - zweiteilig ausführen. Bei derartigen Konstruktionen ist der Polkern an der vom Flachanker entfernten Stirnfläche mit dem auf den Ventilkörper wirkenden Fluiddruck beaufschlagt, so daß eine in Axialrichtung wirkende resultierende Druckkraft auf den Polkern wirkt. Da der Polkern häufig durch Einpressen im Gehäuse befestigt ist, kann es bei ungünstigen Bedingungen, d.h. bei hohem Eingangsdruck und bei einer nicht hinreichenden Flächenpressung zwischen Polkern und Gehäuse vorkommen, daß der Polkern in Axialrichtung hin zum Flachanker verschoben wird. Durch diese Veränderung des Luftspaltes kann die auf den Flachanker wirkende Magnetkraft nicht mehr eindeutig mit dem Öffnungsquerschnitt am Ventilsitz korreliert werden. Dies kann dazu führen, daß das Ansprechverhalten des Ventils nicht mehr den Vorgaben entspricht, so daß eine Nachkalibrierung des Magnetventils erforderlich ist.

Demgegenüber liegt der Erfindung die Aufgabe zugrunde, ein Magnetventil zu schaffen, bei die Funktionssicherheit mit minimalem vorrichtungstechnischen Aufwand verbessert ist.

Die Aufgabe wird durch die Merkmale des Patenanspurches 1 gelöst.

Durch die erfindungsgemäße Maßnahme, den vom Gehäuse getrennten Polkern axial mit etwa dem gleichen Druck zu beaufschlagen, kann auch ein hoher Eingangsdruck nicht dazu führen, daß der Polkern verschoben und somit der Luftspalt verändert wird. Auf diese Weise kann darauf verzichtet werden, besondere Maßnahmen zur Axialfestlegung des Polkerns im Gehäuse vorzunehmen, so daß die Befestigung auf die bisher übliche Weise, beispielsweise durch Pressen oder Verstemmen erfolgen kann.

Da über das Druckbegrenzungsventil der Eingangsanschluß häufig mit einem Ablauf- oder Tankanschluß verbunden wird, ist es besonders vorteilhaft, wenn dieser niedrige Systemdruck (Tankdruck) an beide Stirnflächen des Polkerns angelegt wird.

Bei einer bevorzugten Variante ist das Gehäuse mit einer ringförmigen Polscheibe versehen, deren zum Anker weisende Stirnfläche mit der benachbarten Stirnfläche des Polkerns fluchtet, so daß der axiale Luftspalt einerseits vom Anker und andererseits vom Polkern und von der Polscheibe begrenzt ist.

Die Herstellung des erfindungsgemäßen Magnetventils ist besonders einfach, wenn die Polscheibe mit dem Gehäuse verstemmt wird.

Üblicherweise ist am Flachanker ein Stößel befestigt, der mit seinem freien Endabschnitt auf den Ventilkörper wirkt und diesen in der Grundstellung (minimaler Luftspalt) gegen den Ventilsitz drückt. Dabei durchsetzt der Stößel den Polkern entlang seiner Axialrichtung. Bei einer ersten Alternative kann ein Ausgleichskanal zur Herstellung des Druckausgleichs zwischen den beiden Polkernstirnflächen dadurch gebildet werden, daß der Stößelquerschnitt mit einem Untermaß oder mit Abflachungen etc. ausgebildet wird, so daß zwischen der Axialbohrung des Polkerns und dem Stößel ein Ausgleichskanal gebildet ist. Alternativ dazu kann am Außenumfang des Polkerns ein entsprechender Kanal ausgebildet werden, so daß dieser Ausgleichskanal durch das Gehäuse und den Außenumfang des Polkerns begrenzt ist. Bei beiden Varianten ist es gewährleistet, daß die ventilsitzseitige Stirnfläche und die ankerraumseitige Stirnfläche des Polkerns bei minimalem fertigungstechnischen Aufwand mit dem gleichen Druck beaufschlagbar sind.

Dieser Aufwand läßt sich weiter verringern, wenn der Ventilsitz an einem Einsatzstück ausgebildet wird, das in das Gehäuse eingesetzt wird. Die Verbindung erfolgt dabei vorzugsweise durch Verstemmen.

Bei dieser Konstruktion wird der stromabwärts des Einsatzstückes ausgebildete Raum des Gehäuses über eine Verbindungsbohrung mit dem Aufnahmeraum für den Polkern verbunden. Dabei wird die Verbindungsbohrung größer als der entsprechende Außendurchmesser des diese durchsetzenden Stößels ausgeführt, so daß der Ringraum zwischen Stößel und Verbindungsbohrung Teil des Ausgleichskanals zur Druckbeaufschlagung der beiden Polkernstirnflächen ist.

Der Ankerraum des Gehäuses wird vorzugsweise durch einen Deckel verschlossen, der von Spulenpins durchsetzt ist, wobei in der Durchführungsbohrung für die Spulenpins Dichtringe vorgesehen sind.

Der Aufbau des Ventils ist besonders einfach, wenn dieser Deckel als Stecker- oder Pinabgang ausgebildet ist.

Dabei wird es besonders bevorzugt, wenn das Gehäuse zur Befestigung des Deckels entlang einiger Umfangsabschnitt gebördelt ist.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 einen Längsschnitt durch ein erstes Ausführungsbeispiel eines erfindungsgemäßen Magnetventils;
Figur 2 eine Seitenansicht des Magnetventils aus Figur 1 und
Figur 3 ein zweites Ausführungsbeispiel eines erfindungsgemäßen Magnetventils.

Figur 1 zeigt einen Längsschnitt durch ein Magnetventil, das als Druckbegrenzungsventil für Common-Rail-Dieseleinspritzsysteme ausgeführt ist. Über dieses Magnetventil 1 wird ein Druckanschluß P mit einem Ablaufanschluß, vorzugsweise einem Tankanschluß T verbunden, wenn der Systemdruck am Anschluß P einen vorbeschriebenen Grenzwert erreicht. Insbesondere bei Common-Rail-Systemen, bei denen der Einspritzdruck einen vorbestimmten Wert nicht überschreiten darf, ist es besonders wichtig, wenn übermäßiger Druck möglichst schnell abgebaut werden kann. Ein weiteres Kriterium ist es, daß das Druckbegrenzungsventil einen möglichst kompakten Aufbau bei geringem Teilegewicht aufweist, so daß eine Leichtbaukonstruktion mit hoher Zuverlässigkeit zur Verfügung gestellt werden kann. Diese Anforderungen werden durch das erfindungsgemäße Magnetventil in vorbildlicher Weise erfüllt.

Dieses hat ein aus einem magnetischen Metall hergestelltes Gehäuse 2, das in Patronenbauweise ausgeführt ist und in einen Ventilblock - oder im vorliegenden Fall - in das Gehäuse der Hochdruckpumpe dem Rail einschraubbar ist. Zu diesem Zweck ist an einem radial zurückgesetzten Einschraubbund 4 ein Außengewinde 6 ausgebildet, dem ein Dichtring 8 zur Abdichtung mit dem Rail oder der Hochdruckpumpe zugeordnet ist.

In dem radial erweiterten Bereich des Gehäuses 2 ist ein Spulenkörper 10 aufgenommen. Dieser hat eine Wicklung 12, die in einem Kunststoffmantel 14 eingebettet ist.

Die Stromversorgung der Wicklung 12 erfolgt über Pins 16, die axial aus dem Gehäuse 2 hervorragen.

Bei dem gezeigten Ausführungsbeispiel ist das Gehäuse 2 in der Ansicht gemäß Figur 1 von rechts gesehen topfförmig ausgebildet und umgibt einen Spulenraum 18 zur Aufnahme des Spulenkörpers 10 und einen gegenüber dem Spulenraum 18 radial zurückgesetzten Aufnahmeraum 20 für einen Polkern 21, der beim Ausführungsbeispiel aus dem gleichen Material wie das Gehäuse gefertigt ist. Dieser Aufnahmeraum 20 erstreckt sich aus dem Spulenraum 18 heraus in den Einschraubbund 4 hinein.

An den Aufnahmeraum 20 schließt sich eine Verbindungsbohrung 22 an, die sich stufenförmig zu einer Aufnahme 24 für ein Einsatzstück 26 erweitert, an dem ein kegelförmiger Ventilsitz 34 und der Eingangsanschluß P ausgebildet sind.

Zwischen dem Einsatzstück 26 und der Mündung der Verbindungsbohrung 22 ist ein Raum 30 ausgebildet, in dem der Tankanschluß T als Radialbohrung 32 (oder Radialbohrungsstern) mündet.

In der in Figur 1 dargestellten Grundstellung ist die Verbindung zwischen dem Tankanschluß T und dem Eingangsanschluß P mittels eines kugelförmigen Ventilkörpers 28 verschlossen, der über einen Stößel 36 gegen den Ventilsitz 34 vorgespannt ist. Der Anlagebereich des Stößels 36 an den Ventilkörper 28 ist konisch verjüngt.

An dem vom Ventilsitz 34 entfernten Endabschnitt des Stößels 36 ist ein Flachanker 38 befestigt, an dem eine Druckfeder 40 angreift, die an einem Kunststoff-Deckel des Gehäuses 2 abgestützt ist. Bei dem gezeigten Ausführungsbeispiel durchsetzt der rechte Endabschnitt des Stößels 36 den Flachanker 38. Der Stößel ist dabei mit einer Preßpassung mit Bezug zur Mittelbohrung des Flachankers 38 ausgeführt und zusätzlich über eine Bördelung 44 mit diesem verbördelt, so daß eine Axialverschiebung des Flachankers 38 entlang des Stößels 36 bei normalen Betriebsbedingungen nahezu ausgeschlossen ist. Die Bördelung 44 bildet einen nabenförmigen Abschnitt, der von der Druckfeder 40 umgriffen ist und diese in Radialrichtung sichert.

Der Polkern 21 ist mit Preßpassung in den Aufnahmeraum 20 des Gehäuses eingesetzt und taucht beim gezeigten Ausführungsbeispiel mit einem nabenförmigen Vorsprung in die Verbindungsbohrung 22 ein. Der Außendurchmesser des nabenförmigen Vorsprungs 46 ist allerdings geringer als der Bohrungsdurchmesser gewählt, so daß ein Ringspalt ausgebildet ist, durch den Fluid, im vorliegenden Fall Dieselkraftstoff, vom Raum 30 her durchtreten kann.

Die andere Stirnfläche des Polkerns 21 erstreckt sich durch den Spulenkörper 10 hindurch bis zum Flachanker 38. Die Relativanordnung ist dabei so gewählt, daß in der gezeigten Grundstellung, d.h. bei auf dem Ventilsitz 34 aufliegenden Ventilkörper 28, ein axialer Luftspalt zwischen der rechten Stirnfläche (Ansicht nach Figur 1) des Polkerns 21 und der benachbarten Großfläche des Ankers 38 ausgebildet wird.

Zwischen dem die Wicklung 12 umgebenden Teil des Spulenkörpers 10 und dem Flachanker 38 ist in einer Radialschulter des Gehäuses 2 eine Polscheibe 48 befestigt. Die Verbindung zwischen dem Gehäuse 2 und dieser Polscheibe 48 kann beispielsweise durch eine axiale Verstemmung erfolgen, so daß diese Verbindung auf äußerst einfache Weise herstellbar ist.

Die Polscheibe 48 überlappt in Radialrichtung mit dem Flachanker 38. Die zu letzterem weisende Großfläche liegt in der Stirnflächenebene des Polkerns 21, so daß das Polstück 48 den aus dem Spulenkörper 10 hervorstehenden Endabschnitt des Polkerns 21 ringförmig im Abstand umgreift. Demzufolge ist der Luftspalt abschnittsweise auch durch das Polstück 48 und den Flachanker 38 begrenzt.

Wie aus dem oberen Teil der Figur 1 hervorgeht, durchsetzen die Pins 16 und ein Teil des diesen umgebenden Kunststoffmantels 14 des Spulenkörpers 10 eine Ausnehmung des Polstücks 48. Die Pins 16 durchsetzen auch den Deckel 42 des Gehäuses 2, wobei bei dem gezeigten Ausführungsbeispiel im Durchgangsbereich der Pins 16 ein diese umgreifendes Steckgehäuse 50 ausgebildet ist, das gemeinsam mit den Pins 16 einen Steckerabgang ausbildet. Zur Verbindung mit dem Gegenstück der Steckverbindung trägt das Steckgehäuse 50 einen Rastvorsprung 52.

Die Durchführungsbohrung jedes Pins 16 durch den Dekkel 42 und das einstückig damit ausgebildete Steckgehäuse 50 ist an dem spulenseitigen Endabschnitt zur Aufnahme einer O-Ring-Dichtung 54 erweitert, so daß eine Abdichtung gegenüber dem vom Deckel 42 begrenzten Ankerraum 56 erfolgt.

Um ein Verschieben des Polkerns 21 bei übermäßigem Druck im Raum 30 zu verhindern, ist der Ankerraum 56 über einen Verbindungskanal mit dem Raum 30 verbunden, so daß beide Stirnflächen des Polkerns 21 im wesentlichen mit dem gleichen Druck beaufschlagt werden.

Zur Ausbildung dieses Verbindungskanals bestehen mehrere Möglichkeiten. Bei dem in Figur 1 dargestellen Ausführungsbeispiel ist der Stößel mit Abflachungen 58 versehen, so daß das Druckfluid (Dieselkraftstoff) aus dem Raum 30 bzw. aus dem Ankerraum 56 entlang der Abflachungen 58 in die Durchgangsbohrung des Polkerns 21 eintreten kann.

Da diese Abflachungen 58 mit vergleichsweise hohem Aufwand gefertigt werden müssen, ist der Mittelbereich 60 des Stößels 36 mit einem kleineren Durchmesser ausgeführt als die beiden mit Abflachungen 58 versehenen Endabschnitte, so daß zwischen dem Mittelbereich 60 und der Umfangswandung der Durchgangsbohrung des Polkerns 21 ein Ringspalt ausgebildet wird, der ein Durchtreten des Fluids ermöglicht.

Alternativ dazu könnte man selbstverständlich auch die Abflachungen 58 durchgängig ausbilden.

In einer nicht dargestellten Variante kann am Außenumfang eine spiralförmige oder axial verlaufende Umfangsnut ausgebildet werden, so daß das Fluid vom Raum 30 durch die Verbindungsbohrung 22 und entlang der linken Stirnfläche des Polkerns 21 in diese Umfangsausnehmung gelangen kann und von dort entlang des Außenumfangs des Polkerns 21 zum Ankerraum 56 geführt wird, so daß auch auf diese Weise in den Räumen 56 und 30 der gleiche Druck herrscht.

In Abwandlung von dem in Figur 1 dargestellten Ausführungsbeispiel kann auch auf den in die Verbindungsbohrung 22 eintauchenden Vorsprung 46 des Polkerns 21 verzichtet werden, so daß dessen linke Stirnfläche eben ausgeführt ist. Wesentlich ist, daß das Fluid durch die Verbindungsbohrung hindurchtreten kann.

Bei Unterbrechung der Stromversorgung wird der Flachanker 38 aufgrund der Kraft der Druckfeder 40 in seine Ausgangsposition zurückbewegt, wobei der Stößel 36 den Ventilkörper 34 gegen den Ventilsitz 34 preßt, so daß die Endlage des Magnetankers 38 mit Bezug zum Polkern 21 durch die Anlage des Ventilkörpers 28 auf den Ventilsitz 34 bestimmt ist. Die Materialpaarungen müssen daher so ausgewählt werden, daß der Verschleiß im Bereich der Anlageflächen des Ventilkörpers 28 an den Stößel 36 und an den Ventilsitz 34 auf ein Minimum beschränkt ist, so daß die Breite des Luftspaltes innerhalb der vorgegebenen Toleranzen verbleibt.

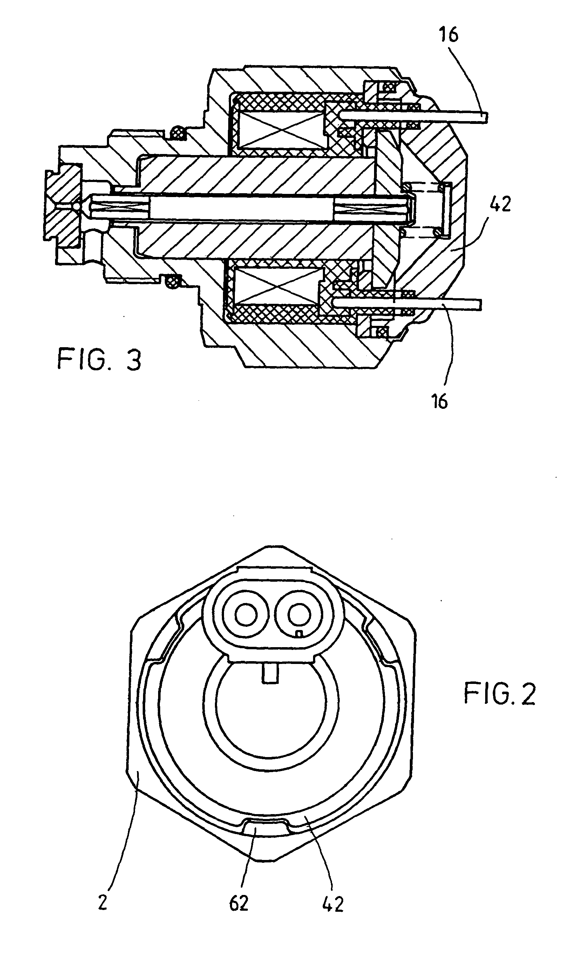

Wie aus der Darstellung gemäß Figur 2 hervorgeht, sind am Außenumfang des Gehäuses 2 am Umfang verteilte Laschen 62 ausgebildet, die nach Aufsitzen des Deckels 42 umgebördelt werden, so daß dieser am Gehäuse befestigt ist.

Figur 3 zeigt ein Ausführungsbeispiel, bei dem der Deckel 42 als Pinabgang ausgebildet ist und somit kein Steckgehäuse 50 aufweist, sondern lediglich von den Pins 16 durchsetzt wird. Im übrigen entspricht der Aufbau des in Figur 3 dargestellten Ausführungsbeispiels demjenigen des in Figur 1 dargestellten Ausführungsbeispiels, so daß auf weitere Ausführungen verzichtet werden kann.

Das Magnetventil kann sowohl mit Ventilsitz als auch mit einem Schiebesitz ausgeführt werden, wobei im letztgenannten Fall der Stößel gegen einen Anschlag läuft, durch den eine Schaltstellung vorgegeben ist.

Prinzipiell einsetzbar ist die erfindungsgemäße Konstruktion auch bei Ventilen, die in der Grundstellung geöffnet sind und dann bei Bestromung der Wicklung geschlossen werden.

Das gezeigte Magnetventil zeichnet sich durch besonders einfachen und kompakten Aufbau aus, wobei die Montage mit vergleichsweise geringem Aufwand erfolgen kann. Ein Hauptaugenmerk bei der Montage ist auf die korrekte Ausgestaltung des Luftspaltes und auf die fluchtende Anordnung der Polscheibe 48 und des Polkerns 21 zu richten. In einer parallel hinterlegten Patentanmeldung der Anmelderin wird das entsprechende Kalibrierverfahren eingehend beschrieben, so daß auf die Ausführungen in der parallelen Patentanmeldung 99 936 346.8 verwiesen wird.

Offenbart ist ein Magnetventil, insbesondere zur Begrenzung des Druckes eines Fluids, mit einem Flachanker, der mit einem Axialspalt zu einem Polkern angeordnet ist. Dieser Polkern ist in ein Gehäuse des Magnetventils eingesetzt und wird von beiden Stirnflächen her mit dem gleichen Fluiddruck beaufschlagt.

## Patentansprüche

1. Magnetventil mit einer in einem Gehäuse (2) aufgenommenen, einen Polkern (21) umgreifenden Wicklung (12) und einem federvorgespannten Flachanker (38) in einem Ankerraum (56), der in seiner Grundstellung mit dem Polkern (21) einen axialen Luftspalt bildet und der an einem den Polkern (21) durchsetzenden Stössel (36) befestigt ist, über dessen vom Flachanker (38) entfernten Endabschnitt eine Verbindung in einem Ventilraum (30) zwischen einem Druck- und einem Ablaufanschluss (P, T) aufsteuerbar ist,
**dadurch gekennzeichnet, dass**
der Polkern (21) an seinen beiden Stirnflächen druckausgeglichen ist, indem der Ankerraum (56) über einen Ausgleichs kanal mit dem Ventilraum (30) verbunden ist.

2. Magnetventil nach Patentanspruch 1, **dadurch gekennzeichnet, dass** beide Stirnflächen des Polkerns (21) mit einem Ablaufanschluss (T) verbunden sind,

3. Magnetventil nach Patentanspruch 1 oder 2, **gekennzeichnet durch** eine Polscheibe (48), die den Polkern (21) im Abstand umgreift und die mit dem Flachanker (38) einen radial aussen liegenden Teilbereich des Luftspaltes begrenzt.

4. Magnetventil nach Patentanspruch 3, **dadurch gekennzeichnet, dass** die Polscheibe (48) mit dem Gehäuse (2) vorzugsweise durch Verstemmen oder Verpressen verbunden ist.

5. Magnetventil nach einem der vorhergehenden Patentansprüche, **gekennzeichnet durch** einen Ventilkörper (28), der über den Stössel (36) gegen einen Ventilsitz (34) vorgespannt ist.

6. Magnetventil nach einem der vorhergehenden Ansprüche, **dadurch gekennzeichnet, dass** der Ausgleichskanal zwischen dem Stössel (36) und einer Axialbohrung des Polkerns (21) gebildet ist.

7. Magnetventil nach einem der vorhergehenden Ansprüche, **dadurch gekennzeichnet, dass** sich der Ausgleichskanal entlang des Aussenumfangs des Polkerns (21) erstreckt.

8. Magnetventil nach einem der Patentansprüche 5 bis 7, **dadurch gekennzeichnet, dass** der Ventilsitz (34) an einem Einsatzstück (26) ausgebildet ist, das im Gehäuse (2) vorzugsweise durch Verstemmen oder Verpressen befestigt ist.

9. Magnetventil nach einem der vorhergehenden Patentanprüche, **gekennzeichnet durch** eine zwischen einem Aufnahmeraum (20) für den Polkern (21) und einem ablaufseitigen Raum (30) des Gehäuses (2) ausgebildete Verbindungsbohrung (22), die vom Stössel (36) mit Radialspiel durchsetzt ist.

10. Magnetvenil nach einem der vorhergehenden Patentasprüche, **dadurch gekennzeichnet, dass** der Ankerraum (56) durch einen Deckel (42) verschlossen ist, der von Spulenpins (16) durchsetzt ist, wobei ein Spalt zwischen Spulenpin (16) und Deckeldurchgang jeweils mittels eines Dichtrings abgedichtet ist.

11. Magnetventil nach Patentanspruch 10, **dadurch gekennzeichnet, dass** die Spulenpins (16) als Stecker oder Pinabgang ausgebildet sind.

12. Magnetventil nach Patentanspruch 10 oder 11, **dadurch gekennzeichnet, dass** das Gehäuse (2) mit dem Deckel (42) verbördelt und/oder vergossen, verschraubt ist.

## Claims

1. Solenoid valve having a winding (12), which is accommodated in a housing (2) and surrounds a pole core (21), and a spring-biased flat armature (38) in an armature space (56), which in its basic position forms an axial air gap with the pole core (21) and which is fastened to a plunger (36), which penetrates the pole core (21) and the end portion of which remote from the flat armature (38) is the means whereby the opening of a connection in a valve space (30) between a delivery- and a discharge port (P, T) is controllable,
**characterized in that**
the pole core (21) at its two end faces is pressure-equalized **in that** the armature space (56) is connected by a connection channel to the valve chamber (30).

2. Solenoid valve according to claim 1, **characterized in that** both end faces of the pole core (21) are connected to a discharge port (T).

3. Solenoid valve according to claim 1 or 2, **characterized by** a pole disk (48), which surrounds the pole core (21) with clearance and which with the flat armature (38) delimits a radially outer sub-region of the air gap.

4. Solenoid valve according to claim 3, **characterized in that** the pole disk (48) is connected preferably by caulking or an interference fit to the housing (2).

5. Solenoid valve according to one of the preceding claims, **characterized by** a valve body (28), which is biased by means of the plunger (36) against a valve seat (34).

6. Solenoid valve according to one of the preceding claims, **characterized in that** an equalizing channel is formed between the plunger (36) and an axial bore of the pole core (21).

7. Solenoid valve according to one of the preceding claims, **characterized in that** the equalizing channel extends along the outer periphery of the pole core (21).

8. Solenoid valve according to one of claims 5 to 7, **characterized in that** the valve seat (34) is formed on an insert piece (26), which is fastened preferably by caulking or an interference fit in the housing (2).

9. Solenoid valve according to one of the preceding claims, **characterized by** a connection bore (22), which is formed between a location space (20) for the pole core (21) and a discharge-side space (30) of the housing (2) and is penetrated by the plunger (36) with radial clearance.

10. Solenoid valve according to one of the preceding claims, **characterized in that** the armature space (56) is sealed by a cover (42), which is penetrated by coil pins (16), wherein a gap between coil pin (16) and cover through-hole is sealed in each case by means of a sealing ring.

11. Solenoid valve according to claim 10, **characterized in that** the coil pins (16) take the form of a plug-in connector or pin feeder.

12. Solenoid valve according to claim 10 or 11, **characterized in that** the housing (2) is joined by flanging and/or embedding, screw connection to the cover (42).

## Revendications

1. Electrovanne avec un bobinage (12) contenu dans un boîtier (2) entourant un noyau polaire (21) et une ancre plate (38) prétendue par ressort dans un espace d'ancre (56), qui forme dans sa position de base une fente d'aération axiale avec le noyau polaire (21) et qui est fixé à un des pistons (36) chargeant le noyau polaire (21) sur le segment terminal éloigné de l'ancre plate (38) duquel une conduite peut être commandée dans un espace de vanne (30) entre un raccord de pression et d'écoulement (P, T),
**caractérisée en ce que**
le noyau polaire (21) est compensé en pression au niveau de ses deux surfaces avant du fait que la conduite de l'espace d'ancre (56) est reliée à l'espace de vanne (30) par l'intermédiaire d'un canal de liaison.

2. Electrovanne selon la revendication 1, **caractérisée en ce que** les deux surfaces avant du noyau polaire (21) sont reliées par un raccord d'écoulement (T).

3. Electrovanne selon la revendication 1 ou 2, **caractérisée par** une plaque polaire (48) qui entoure le noyau polaire (21) à une certaine distance et délimite avec l'ancre plate (38) une partie de zone de la fente d'aération disposée à l'extérieur dans le plan radial.

4. Electrovanne selon la revendication 3, **caractérisée en ce que** la plaque polaire (48) est reliée au boîtier (2), de préférence par matage ou compression.

5. Electrovanne selon l'une quelconque des revendications précédentes, **caractérisée par** un corps de vanne (28) qui est prétendu contre un siège de vanne (34) par l'intermédiaire du piston (36).

6. Electrovanne selon l'une quelconque des revendications précédentes, **caractérisée en ce que** un canal d'équilibrage est formé entre le piston (36) et un alésage axial du noyau polaire (21).

7. Electrovanne selon l'une quelconque des revendications précédentes, **caractérisée en ce que** le canal d'équilibrage s'étend le long du périmètre extérieur du noyau polaire (21).

8. Electrovanne selon l'une quelconque des revendications 5 à 7, **caractérisée en ce que** le siège de vanne (34) est formé au niveau d'un insert (26) qui est fixé dans le boîtier (2), de préférence par matage ou compression.

9. Electrovanne selon l'une quelconque des revendications précédentes, **caractérisée par** un alésage de conduite (22) formé entre un espace de logement (20) pour le noyau polaire (21) et un espace (30) situé du côté d'écoulement du boîtier (2), ledit alésage étant chargé avec du jeu radial par le piston (36).

10. Electrovanne selon l'une quelconque des revendications précédentes, **caractérisée en ce que** l'espace d'ancre (56) est fermé par un couvercle (42) qui est chargé par des broches de bobinage (16), une fente étant respectivement étanchéifiée entre la broche de bobinage (16) et le passage de couvercle à l'aide d'une bague d'étanchéité.

11. Electrovanne selon la revendication 10, **caractérisée en ce que** les broches de bobinage (16) prennent la forme d'une fiche ou d'une sortie de broche.

12. Electrovanne selon la revendication 10 ou 11, **caractérisée en ce que** le boîtier (2) est vissé au couvercle (42), bordé et/ou scellé.
